# EUROPÄISCHE PATENTSCHRIFT

(11) **EP 3 257 826 B1**
(45) Veröffentlichungstag und Bekanntmachung des Hinweises auf die Patenterteilung: **19.05.2021**
(21) Anmeldenummer: 16175062.5
(22) Anmeldetag: 17.06.2016
(51) Int. Cl.: C03C 21/00

(54) **VERFAHREN ZUR HERSTELLUNG EINER ANTIBAKTERIELLEN GLASOBERFLÄCHE**
METHOD FOR PRODUCING AN ANTIBACTERIAL GLASS SURFACE
PROCEDE DE FABRICATION D'UNE SURFACE EN VERRE ANTIBACTERIENNE

(43) Veröffentlichungstag der Anmeldung: 20.12.2017
(73) Patentinhaber: Glas Trösch Holding AG, 6374 Buochs (CH)
(72) Erfinder: SYNOWCZYK, Andreas, 4800 Zofingen (CH)
(74) Vertreter: Keller Schneider Patent- und Markenanwälte AG (Bern)

(56) Entgegenhaltungen:
- EP-A1- 1 449 816
- DE-A1-102005 039 298

## Beschreibung

### Technisches Gebiet

Die Erfindung betrifft ein Verfahren zur Herstellung einer antibakteriellen Glasoberfläche durch einen lonenaustausch.

### Stand der Technik

Glasoberflächen mit antibakteriellen Eigenschaften sind im Stand der Technik bekannt. Die Herstellung solcher Glasoberflächen wird besonders vorteilhaft durch den Austausch von Ionen aus dem Glassubstrat durch antibakteriell wirkende Metallionen hergestellt.

Die EP 1 449 816 (Gemtron Corporation) offenbart beispielsweise ein Verfahren, bei welchem ein Glas oder ein glasähnliches Substrat mit einer antimikrobiell ausreichenden Konzentration von Metallionen, wie beispielsweise Silber-, Kupfer-, Zink- oder ähnliche Ionen in einer Oberflächenregion angereichert wird. Die Ionen werden in einem Trägersubstrat auf das Glas aufgetragen und anschliessend über eine thermische Behandlung bei ca. 600°C mit Alkalimetall- oder Erdalkalimetallionen des Glassubstrats ausgetauscht. Das Glas wird bei dieser Behandlungsmethode nicht oder nur geringfügig verfärbt. Die Ionen liegen in der Form eines Salzes oder Metallkomplexes im Trägersubstrat vor. Als Trägermaterial eignet sich unter anderem Propylenglykol. Das Trägermaterial kann beispielsweise auf das Glas gesprayt oder mittels Siebdruck aufgetragen werden.

Die US 6,509,057 (Sumitomo Osaka Cement Co. Ltd.) beschreibt einen antibakteriellen, fungiziden und algiziden Glasartikel, bei welchem eine antibakterielle, fungizide oder algizide Komponente innerhalb des Glasartikels eingebettet ist. Die Komponente wird auf eine Oberfläche des Glasartikels aufgetragen, wobei diese bei einem anschliessenden Temperierungsschritt in den Glasartikel eindiffundiert. Als Komponente kann unter anderem Kupfer oder Kupfersulfid verwendet werden. Die Temperatur für den Temperierungsschritt liegt bei über 200°C, jedoch bei unter 800°C. Bei einer Glasplatte wird eine Temperatur von 400°C bis 500°C verwendet.

Die WO 2012/135194 A1 (Corning Inc.) bezieht sich auf Glasartikel, welche Kupferionen, elementares Kupfer oder kolloidales Kupfer umfassen, wobei die Glasartikel durch das Kupfer antibakteriell wirken. Das Kupfer ist dabei im gesamten Glasartikel dispergiert oder an der Oberfläche lokalisiert. In einer Ausführungsform wird das Kupfer in einem Oberflächenbereich von 2 - 3 µm reduziert, beispielsweise durch Erhitzen in einer Atmosphäre mit Wasserstoff. Ein antimikrobielles Glas kann auch mit einer Schmelze, welche 0.1 - 20 mol-% an CuO aufweist, hergestellt werden.

Die WO 2012/013696 A1 (AGC Glass Europe) beschreibt einen Glasartikel mit Oberflächen, welche über antimikrobielle Eigenschaften verfügen. Der Glasartikel umfasst ein antimikrobielles Agens, welches unterhalb der Glasoberfläche vorhanden ist sowie eine anorganische Komponente, welche innerhalb der Glasmasse in der Nähe der Oberfläche vorhanden ist und deren Konzentration von der Oberfläche zur Glasmasse hin auf null oder einen konstanten Wert hin abnimmt. Der Glasartikel ist insbesondere ein Flachglas. Das antimikrobielle Agens ist insbesondere Silber, Kupfer, Zinn oder Zink, welches als Metallpartikel oder Oxid vorliegt. Die anorganische Komponente verringert oder verlangsamt die Diffusion des antimikrobiellen Agens bei Erhitzung des Glasartikels. Die anorganische Komponente ist aus Magnesium, Calcium, Strontium, Barium, Scandium, Yttrium, Lanthan, Titan, Zirkon, Vanadium, Niobium, Tantal, Aluminium, Gallium, Indium, Silizium oder Germanium ausgewählt, jeweils als Metallpartikel, Oxid, Nitrid oder Karbid. Die anorganische Komponente wird durch einen Temperiervorgang in den Glasartikel eindiffundiert.

Die DE 10 2005 039 298 offenbart antimikrobiell ausgerüstete Gläser und Glaskeramiken sowie Verfahren zu deren Herstellung. Hierzu wird eine antimikrobielle Mischung umfassend mindestens ein antimikrobiell wirksames Metallsalz in Form eines Oxids, mindestens eine Komponente in Form eines Sulfates sowie mindestens eine organische Matrix verwendet.

Bei den aus dem Stand der Technik bekannten Verfahren ergibt sich der Nachteil, dass sich der Diffusionsprozess von Kupferkationen in das Glassubstrat hinein kaum steuern lässt und dieser daher bereichsweise mit unterschiedlicher Intensität abläuft. Durch eine inhomogene Wärmeverteilung bei der Wärmebehandlung entstehen ebenfalls bereichsweise unterschiedlich intensive Diffusionsprozesse. Diese Intensitätsunterschiede führen zu inhomogenen, teilweise intensiven Farbverläufen auf der Glasoberfläche, was die optischen Eigenschaften einer solchen Oberfläche negativ beeinflusst.

### Darstellung der Erfindung

Aufgabe der Erfindung ist es, ein dem eingangs genannten technischen Gebiet zugehörendes Verfahren zu schaffen, welches einen homogenen Diffusionsprozess von Ionen über die gesamte Glasoberfläche ermöglicht.

Die Lösung der Aufgabe ist durch die Merkmale des Anspruchs 1 definiert. Gemäss der Erfindung umfasst das Verfahren in einem ersten Schritt das Vorlegen einer Glasscheibe mit mindestens einer Oberfläche. Anschliessend wird eine Siebdruckpaste auf die mindestens eine Oberfläche aufgetragen. Die Siebdruckpaste umfasst ein Siebdrucköl sowie mindestens ein Nitrid, Sulfid oder Oxid eines ersten Metallkations. Das erste Metallkation ist vorzugsweise Aluminium, Kupfer, Titan, Zink, Zinn oder Zirkon. In einem nächsten Schritt wird die Siebdruckpaste auf der mindestens einen Oberfläche angetrocknet, insbesondere bei 60°C. Anschliessend erfolgt eine Wärmebehandlung der Glasscheibe bei einer Temperatur von über 500°C, insbesondere von über 600°C. Danach wird die Siebdruckpaste von der mindestens einen Oberfläche entfernt. Das Verfahren ist dadurch gekennzeichnet, dass die Siebdruckpaste ein thermisch stabiles Oxid eines zweiten Metallkations umfasst.

Durch die Zugabe eines thermisch stabilen Oxids des zweiten Metallkations kann die Diffusion des ersten Metallkations in das Glassubstrat abgeschwächt werden, was eine bessere Steuerung der Intensität der Diffusion ermöglicht. Somit kann durch diese gezielte Abschwächung eine viel homogenere Diffusion erzielt werden, was die Entstehung von Farbverläufen auf der mindestens einen Oberfläche der Glasscheibe verhindert.

Die Wärmebehandlung erfolgt vorzugsweise mit Temperaturen über 500°C, insbesondere bevorzugt von über 600°C, bevorzugt jedoch kleiner als 1200°C.

In der vorliegenden Anmeldung wird unter dem Begriff "thermisch stabiles Oxid" ein Oxid des zweiten Metallkations verstanden, welche einen Schmelzpunkt von vorzugsweise über 2000°C, insbesondere bevorzugt von über 2500°C aufweist. Dadurch verhält sich das thermisch stabile Oxid des zweiten Metallkations unter den thermischen Bedingungen des Verfahrens vollständig stabil, wobei das zweite Metallkation nicht an den Diffusionsvorgängen zwischen der Siebdruckpaste und dem Substrat der Glasscheibe teilnehmen. Ferner zerfällt das thermisch stabile Oxid des zweiten Metallkations unter den thermischen Bedingungen des Verfahrens nicht.

Nitride, Oxide sowie Sulfide von Aluminium, Kupfer, Titan, Zink, Zinn oder Zirkon sind in Wasser nur schwer löslich und bei Umgebungstemperaturen zudem stabil. Dadurch kann die Siebdruckpaste problemlos über längere Zeit ohne besondere Vorkehrungen gelagert werden, ohne dass es zu Beeinträchtigungen der Wirkung beispielsweise durch Reaktionen mit der Luftfeuchtigkeit oder durch Zersetzung kommt.

Das erste Metallkation sowie das zweite Metallkation sind vorzugsweise unterschiedlich. In einer besonderen Ausführungsform sind das erste Metallkation sowie das zweite Metallkation identisch. In diesem Fall liegt das erste Metallkation nicht in der Form eines Oxids vor oder das erste Metallkation liegt als Oxid vor, weist jedoch eine andere Oxidationsstufe auf, als das zweite Metallkation.

Die Wärmebehandlung der Glasscheibe erfolgt insbesondere bevorzugt im Rahmen eines Fertigungsprozesses von Einscheiben-Sicherheitsgläsern (ESG). Bei diesem Fertigungsprozess wird eine Glasscheibe auf Temperaturen oberhalb der Transformationstemperatur erwärmt und anschliessend schlagartig wieder abgekühlt. Die Siebdruckpaste kann daher vor der Temperaturbehandlung im Fertigungsprozess von ESG auf mindestens eine Oberfläche der Glasscheibe aufgetragen werden. Dadurch lässt sich das vorliegende erfindungsgemässe Verfahren nahtlos in bestehende Fertigungsverfahren eingliedern.

Durch die Wärmebehandlung finden Diffusionsvorgänge zwischen der Siebdruckpaste und der mindestens einen Oberfläche statt. Ferner kommt es zu Redoxreaktionen sowie Ladungstransferreaktionen zwischen Bestandteilen der Siebdruckpaste sowie des Glassubstrates. Das Eindiffundieren der ersten Metallkationen in das Glassubstrat bedingt einen Ladungsausgleich mit positiven Gegenionen. Diese Gegenionen sind typischerweise Natriumkationen, da diese im Glassubstrat im Vergleich zu anderen Ionen über eine hohe Beweglichkeit verfügen. In der Siebdruckpaste reagieren die Natriumkationen wiederum mit den Nitriden, Oxiden oder Sulfiden oder deren Reaktionsprodukte.

Vorzugsweise wird als Glasscheibe eine im Floatglasverfahren hergestellte Glasscheibe verwendet. Insbesondere bevorzugt wird die Siebdruckpaste auf der Feuerseite der Floatglasscheibe aufgetragen. Durch die Anreicherung von Zinn(II) auf der Zinnseite der Floatglasscheibe kann es zu Redoxreaktionen mit dem Nitrid, Sulfid oder Oxid des ersten Metallkations sowie mit dem ersten Metallkation kommen, welche zu einer unerwünschten Färbung der Oberfläche führen. Dies wurde insbesondere bei der Verwendung von Kupfersulfid beobachtet. Hierbei wird vermutet, dass das im Bereich der Zinnseite angereicherte Zinn(II) oxidiert wird, wobei gleichzeitig das Kupfer(I) oder Kupfer(II) des Kupfersulfids reduziert wird. Dabei entsteht metallisches Kupfer, welches kolloidal auf der Oberfläche der Zinnseite der Glasscheibe vorliegt und eine intensiv rote Färbung der Oberfläche hervorruft. Daher wird vorzugsweise die Siebdruckpaste auf der Feuerseite aufgetragen.

Um eine unerwünschte Färbung der mindestens einen Oberfläche zu vermeiden kann vorzugsweise eine Glasscheibe aus Weissglas verwendet werden. Weissglas zeichnet sich durch einen möglichst geringen Gehalt an Eisenoxid in der Schmelze aus. Es wurde nämlich beobachtet, dass das Eisenoxid mit dem Nitrid, Sulfid oder Oxid des ersten Metallkations Redoxreaktionen eingehen kann, welche zu unerwünschten Verfärbungen führen können. Insbesondere kann das im Glassubstrat vorhandene Eisen(II) im Bereich der Oberfläche zu Eisen(III) oxidiert werden, während eine Reduktion der ersten Metallkationen stattfindet, wobei elementares Metall entsteht, welches kolloidal auf der Oberfläche abgeschieden wird. Insbesondere bei Kupfer kann so eine rote Färbung auf der Oberfläche entstehen.

In einer besonderen Ausführungsform der Erfindung werden jedoch die beschriebenen Redoxreaktionen gezielt eingesetzt, um der mindestens einen Oberfläche der Glasscheibe zusätzlich eine charakteristische Färbung zu verleihen.

Das Auftragen der Siebdruckpaste auf die mindestens eine Oberfläche erfolgt vorzugsweise durch ein Siebdruckverfahren.

In der folgenden Anmeldung wird unter "antibakterielle Glasoberfläche" eine Glasoberfläche verstanden, welche das bakterielle Wachstum hemmt und/oder welche Bakterien abtötet, also bakteriostatische und/oder bakterizide Eigenschaften aufweist. Zudem kann eine antibakterielle Glasoberfläche auch eine fungizide und/oder fungistatische Wirkung aufweisen.

Vorzugsweise ist das wenigstens eine thermisch stabile Oxid des zweiten Metallkations ein inertes Oxid, insbesondere ein Oxid mit einer Standardbildungsenthalpie kleiner als -800 kJ/mol, vorzugsweise kleiner als -1100 kJ/mol.

Ein inertes Oxid ist reaktionsträge, so dass sichergestellt ist, dass dieses nicht unerwünschte Reaktionen mit der mindestens einen Oberfläche der Glasscheibe bzw. unerwünschte Redoxreaktionen mit Komponenten der Glasscheibe eingeht.

Vorzugsweise liegt das wenigstens eine thermisch stabile Oxid des zweiten Metallkations in einer Konzentration von 20 Gew.-% bis 50 Gew.-%, insbesondere von 30 Gew.-% bis 40 Gew.-% in der Siebdruckpaste vor.

Werden thermisch stabile Oxide von mehreren zweiten Metallkationen verwendet, so beträgt die Konzentration aller thermisch stabilen Oxiden der zweiten Metallkationen zusammen in der Siebdruckpaste von 20 Gew.-% bis 50 Gew.-%, vorzugsweise von 20 Gew.-% bis 40 Gew.-%.

Bevorzugt liegt das mindestens eine Nitrid, Sulfid oder Oxid des ersten Metallkations in einer Konzentration von 20 Gew.-% bis 50 Gew.-%, insbesondere von 30 Gew.-% bis 40 Gew.-% in der Siebdruckpaste vor.

Bei der Verwendung von mehr als einem Nitrid, Sulfid oder Oxid des ersten Metallkations oder bei der Verwendung von Nitrid, Sulfid oder Oxid von unterschiedlichen ersten Metallkationen beträgt die Konzentration aller entsprechenden Nitride, Sulfide oder Oxide in der Siebdruckpaste von 20 Gew.-% bis 50 Gew.-%, insbesondere von 30 Gew.-% bis 40 Gew.-%.

Bevorzugt ist das wenigstens eine thermisch stabile Oxid des zweiten Metallkations Zirkon(IV)oxid. Zirkon(IV)oxid weist eine Schmelztemperatur von 2715 C sowie eine Standardbildungsenthalpie von -1106 kJ/mol auf. Dadurch ist Zirkon(IV)oxid für das erfindungsgemässe Verfahren besonders gut geeignet.

Vorzugsweise umfasst die Siebdruckpaste mindestens ein Oxid oder Sulfid von Kupfer sowie ein Oxid oder Sulfid von Zink. Dadurch können sowohl Kationen von Kupfer sowie von Zink in die mindestens eine Oberfläche der Glasscheibe eindiffundieren. Die Anwesenheit von zwei antibakteriell wirkenden Metallkationen erhöht den antibakteriellen Effekt auf der Glasoberfläche markant.

Die Siebdruckpaste umfasst vorzugsweise Kupfer(I)sulfid. Durch die Verwendung von Kupfer(I)sulfid kann die Rauheit der mindestens einen Oberfläche erhöht werden. Eine Erhöhung der Rauheit verbessert die antibakteriellen Eigenschaften der mindestens einen Oberfläche, da die Kontaktfläche von Kontaminationen mit der mindestens einen Oberfläche durch die Rauheit vergrössert wird.

Die Sulfidanionen (S²⁻) reagieren in der Siebdruckpaste mit Luftsauerstoff zu Sulfitanionen (SO₃²⁻), welche sich anschliessend mit den Natriumkationen eine lonenbindung zu Natriumsulfit (Na₂SO₃) eingehen. Das Natriumsulfit wird in Anwesenheit von Sauerstoff und Wärme zu Natriumsulfat (Na₂SO₄) oxidiert. Die Rauheit ist eine Folge der intensiv ablaufenden Reaktionen von Natriumkationen aus der Glasoberfläche und den Sulfitanionen. Angetrieben durch die exotherme Reaktion von Natriumsulfat mit -328.8 kJ/mol, erfolgt die Reaktion bis keine Natrium-Kationen aus der Glasoberfläche durch Diffusion zum Cupfer(I)-sulfid nachgeliefert werden können bzw. bis sich die Sulfid-Anionen entsprechend der Menge von Cupfer(I)-sulfid in der Siebdruckpaste mit dem Natrium-Kationen vollständig umsetzen konnten.

Der Entzug von Natrium-Kationen erfolgt mit einer gravierenden stöchiometrischen Menge aus der Glasoberfläche und führt damit zu einem erkennbaren Materialverlust einer Komponente aus der Glasoberfläche, was zur erwähnten Rauheit der Glasoberfläche führt.

Da im Vergleich zu Kupfer(II)kationen bei Kupfer(I)kationen zum Ladungsausgleich nur ein Natriumkation aus dem Glassubstrat austreten muss, wird der Diffusionsvorgang beim Kupfer(I)sulfid schneller vonstattengehen als beim Kupfer(II)sulfid. Dadurch entsteht bei der Verwendung von Kupfer(I)sulfid eine höhere Rauigkeit als bei der Verwendung von Kupfer(II)sulfid.

Vorzugsweise umfasst die Siebdruckpaste zusätzlich Zink(II)sulfid, insbesondere in Kombination mit Kupfer(I)sulfid. Durch die Kombination von Zinkkationen und Kupferkationen kann die antibakterielle Wirkung erhöht werden. Wird für beide Kationen als Gegenionen Sulfid verwendet, kann zusätzlich die Oberflächenrauheit der mindestens einen Oberfläche erhöht werden.

Als Siebdrucköl wird vorzugsweise eine Mischung von Polypropylenglykolen mit unterschiedlichen Molekulargewichten verwendet, insbesondere von Polypropylenglykolen mit einem Molekulargewicht von 400 g/mol und 100 g/mol.

Durch die Mischung von Polypropylenglykolen mit unterschiedlichen Molekulargewichten kann die Viskosität des Siebdrucköls variiert werden. Dadurch kann die Viskosität stets für die spezifische Anwendung auf einen optimalen Wert eingestellt werden. Insbesondere vorteilhaft hat sich eine Viskosität in der Grössenordnung von 10³ mPa s erwiesen.

Polypropylenglykol ist wasserlöslich, ungiftig und kaum umweltgefährdend, so dass die Verwendung von Polypropylenglykol als Basis des Siebdrucköls keine aufwändigen Sicherheitsvorkehrungen nötig macht.

Alternativ kann das Siebdrucköl jedoch auch ätherische Öle, insbesondere Pinienöl aufweisen.

Die Siebdruckpaste enthält vorzugsweise pyrogene Kieselsäure, insbesondere in einer Konzentration von 5 - 15 Gew.-%. Durch die Zugabe von pyrogener Kieselsäure können der Siebdruckpaste thixotrope Eigenschaften verliehen werden, womit das Auftragen der Siebdruckpaste auf die mindestens eine Oberfläche vereinfacht werden kann. Dies ist insbesondere vorteilhaft, wenn die Siebdruckpaste mittels Siebdruckverfahren auf die mindestens eine Oberfläche aufgetragen wird.

Vorzugsweise wird die Siebdruckpaste anschliessend von der mindestens einen Oberfläche entfernt, insbesondere mit einer wässrigen Lösung von 15 - 20 Vol.-% 2-Hxdroxybutandisäure oder L-(+)-Ascorbinsäure.

Durch die Verwendung einer wässrigen Lösung von 2-Hxdroxybutandisäure oder L-(+)-Ascorbinsäure wird das Entfernern der Siebdruckpaste erleichtert, da diese Hilfsstoffe als Komplexbildner fungieren, welche mit den in der Siebdruckpaste verbliebenen Metallkationen Komplexe bilden, welche leichter lösbar sind.

Die vorliegende Anmeldung betrifft ferner eine Glasscheibe mit wenigstens einer antibakteriellen Oberfläche hergestellt mit einem erfindungsgemässen Verfahren.

Vorzugsweise weist die wenigstens eine antibakterielle Oberfläche eine mittlere Rauheit im Bereich von 80 nm bis 180 nm und eine quadratische Rauheit im Bereich von 100 nm und 200 nm auf.

Eine derartige Oberfläche wird insbesondere durch die Verwendung eines Sulfids des ersten Metallkations, insbesondere bei Verwendung von Kupfer(I)sulfid erhalten. Durch die erhöhte Rauheit werden die antibakteriellen Eigenschaften der wenigstens einen antibakteriellen Oberfläche verbessert, da sich die Kontaktfläche der wenigstens einen antibakteriellen Oberfläche sowie einer bakteriellen Kontamination vergrössert.

### Beispiele

Die antibakterielle Wirkung wurde getestet, indem eine Siebdruckpaste aus 32 Gew.-% Kupfersulfit, 34 Gew.-% Zirkondioxid sowie 34 Gew.-% Siebdrucköl auf eine Hälfte einer Oberfläche eines Floagtlases mittels Siebdruck aufgetragen wurde. Das Siebdrucköl umfasste Polypropylenglykol mit einer Viskosität von 10³ mPa*s. Die thermische Behandlung erfolgte bei 600 °C bei einer Heizzeit von 240 Sekunden. Anschliessend wurde die Siebdruckpaste mittels einer wässrigen Lösung von 20 Vol.-% L-(+)-Ascorbinsäure abgewaschen.

Als Nächstes wurde eine Zellsuspension mit *E. coli* oder *S. epidermis* (2.5 x 10⁵ - 1.0 x 10⁶ Zellen pro Milliliter) vorbereitet. Von dieser Suspension wurden drei Aliquote von 400 µl auf die mit der Siebdruckpaste behandelte Hälfte des Floatglases sowie sechs Aliquote von 400 µl auf die unbehandelte Hälfte des Floatglases aufgetragen. Alle aufgetragenen Aliquote wurden mit einer sterilen Polyethylenfolie (40 x 40 mm) abgedeckt. Drei der Aliquote auf der unbehandelten Hälfte wurden als Kontrolle gleich wieder entfernt. Die restlichen Aliquote wurden für 4 oder 24 Stunden bei 35°C in einer mit Wasserfeuchtigkeit gesättigten Atmosphäre inkubiert. Nach der Inkubation wurde die Aliquote von der Oberfläche des Flintglases entfernt und auf ein Nährmedium in einer Petrischale überführt. Die Aliquote, die vor der Inkubation entfernt wurden, wurde ebenfalls auf Nährmedium überführt. Nach Inkubation der Petrischalen wurde die Anzahl der koloniebildenden Einheiten bestimmt um die Abtötungsrate der Zellen auf der mit dem Siebdrucköl behandelten Hälfte des Floatglases zu bestimmen. Die Anzahl der vor der Inkubation entfernten Aliquote diente dabei zur Bestimmung der Grundlinie der koloniebildenden Einheiten auf dem Floatglas.

Die experimentellen Daten ergaben folgendes Bild:

| **Probe** | **Inkubationszeit** | **Keim Abtötungsrate** | |
|---|---|---|---|
| 1 | 24 Stunden | *E. coli* | 80% |
| 2 | 4 Stunden | *E. coli* | 60% |
| 3 | 24 Stunden | *S. epidermis* | 100% |

Dadurch konnte gezeigt werden, dass eine durch das vorliegende Verfahren behandelte Oberfläche von Glasscheiben sehr gute antibakterielle Eigenschaften aufweisen.

## Patentansprüche

1. Verfahren zur Herstellung einer antibakteriellen Glasoberfläche, umfassend die Schritte:
a) Vorlegen einer Glasscheibe mit mindestens einer Oberfläche;
b) Auftragen einer Siebdruckpaste auf die mindestens eine Oberfläche, wobei die Siebdruckpaste ein Siebdrucköl sowie mindestens ein Nitrid, Sulfid oder Oxid eines ersten Metallkations umfasst, insbesondere von Aluminium, Kupfer, Titan, Zink, Zinn oder Zirkon;
c) Trocknung der Siebdruckpaste auf der mindestens einen Oberfläche, insbesondere bei 60°C;
d) Wärmebehandlung der Glasscheibe bei einer Temperatur von über 500°C, insbesondere von über 600°C;
e) Entfernung der Siebdruckpaste;
**dadurch gekennzeichnet, dass** die Siebdruckpaste wenigstens ein thermisch stabiles Oxid eines zweiten Metallkations umfasst.

2. Verfahren nach Anspruch 1, **dadurch gekennzeichnet, dass** das wenigstens eine thermisch stabile Oxid des zweiten Metallkations ein inertes Oxid ist, insbesondere ein Oxid mit einer Standardbildungsenthalpie kleiner als -800 kJ/mol, vorzugsweise kleiner als -1100 kJ/mol.

3. Verfahren nach einem der Ansprüche 1 oder 2, **dadurch gekennzeichnet, dass** das wenigstens eine thermisch stabile Oxid des zweiten Metallkations in einer Konzentration von 20 Gew.-% bis 50 Gew.-%, insbesondere von 30 Gew.-% bis 40 Gew.-% in der Siebdruckpaste vorliegt.

4. Verfahren nach einem der Ansprüche 1 bis 3, **dadurch gekennzeichnet, dass** das mindestens ein Nitrid, Sulfid oder Oxid des ersten Metallkations in einer Konzentration von 20 Gew.-% bis 50 Gew.-%, insbesondere von 30 Gew.-% bis 40 Gew.-% in der Siebdruckpaste vorliegt.

5. Verfahren nach einem der Ansprüche 1 bis 4, **dadurch gekennzeichnet, dass** das wenigstens eine thermisch stabile Oxid des zweiten Metallkations Zirkon(IV)oxid ist.

6. Verfahren nach einem der Ansprüche 1 bis 5, **dadurch gekennzeichnet, dass** die Siebdruckpaste mindestens ein Oxid oder Sulfid von Kupfer und/oder von Zink umfasst.

7. Verfahren nach einem der Ansprüche 1 bis 6, **dadurch gekennzeichnet, dass** die Siebdruckpaste Kupfer(I)sulfid umfasst.

8. Verfahren nach Anspruch 7, **dadurch gekennzeichnet, dass** die Siebdruckpaste zusätzlich Zink(II)sulfid umfasst.

9. Verfahren nach einem der Ansprüche 1 bis 8, **dadurch gekennzeichnet, dass** als Siebdrucköl eine Mischung von Polypropylenglykolen mit unterschiedlichen Molekulargewichten verwendet wird, insbesondere von Polypropylenglykolen mit einem Molekulargewicht von 400 g/mol und 100 g/mol.

10. Verfahren nach einem der Ansprüche 1 bis 9, **dadurch gekennzeichnet, dass** die Siebdruckpaste eine Viskosität in der Grössenordnung von 10³ mPa*s aufweist.

11. Verfahren nach einem der Ansprüche 1 bis 10, **dadurch gekennzeichnet, dass** die Siebdruckpaste pyrogene Kieselsäure enthält, insbesondere in einer Konzentration von 5 - 15 Gew.-%.

12. Verfahren nach einem der Ansprüche 1 bis 11, **dadurch gekennzeichnet, dass** die Siebdruckpaste anschliessend von der mindestens einen Oberfläche entfernt wird, insbesondere mit einer wässrigen Lösung von 15 - 20 Vol.-% 2-Hxdroxybutandisäure oder L-(+)-Ascorbinsäure.

13. Glasscheibe mit wenigstens einer antibakteriellen Oberfläche hergestellt mit einem Verfahren gemäss einem der Ansprüche 1 bis 12.

14. Glasscheibe nach Anspruch 13, **dadurch gekennzeichnet, dass** die wenigstens eine antibakterielle Oberfläche eine mittlere Rauheit im Bereich von 80 nm bis 180 nm und eine quadratische Rauheit im Bereich von 100 nm und 200 nm aufweist.

## Claims

1. Process for producing an antibacterial glass surface, comprising the steps:
a) provision of a glass sheet having at least one surface;
b) application of a screen printing paste to the at least one surface, where the screen printing paste comprises a screen printing oil and at least one nitride, sulfide or oxide of a first metal cation, in particular of aluminium, copper, titanium, zinc, tin or zirconium;
c) drying of the screen printing paste on the at least one surface, in particular at 60°C;
d) heat treatment of the glass sheet at a temperature above 500°C, in particular above 600°C;
e) removal of the screen printing paste;
**characterized in that** the screen printing paste comprises at least one thermally stable oxide of a second metal cation.

2. Process according to Claim 1, **characterized in that** the at least one thermally stable oxide of the second metal cation is an inert oxide, in particular an oxide having a standard enthalpy of formation of less than -800 kJ/mol, preferably less than -1100 kJ/mol.

3. Process according to either Claim 1 or 2, **characterized in that** the at least one thermally stable oxide of the second metal cation is present in a concentration of from 20% by weight to 50% by weight, in particular from 30% by weight to 40% by weight, in the screen printing paste.

4. Process according to any of Claims 1 to 3, **characterized in that** the at least one nitride, sulfide or oxide of the first metal cation is present in a concentration of from 20% by weight to 50% by weight, in particular from 30% by weight to 40% by weight, in the screen printing paste.

5. Process according to any of Claims 1 to 4, **characterized in that** the at least one thermally stable oxide of the second metal cation is zirconium(IV) oxide.

6. Process according to any of Claims 1 to 5, **characterized in that** the screen printing paste comprises at least one oxide or sulfide of copper and/or of zinc.

7. Process according to any of Claims 1 to 6, **characterized in that** the screen printing paste comprises copper(I) sulfide.

8. Process according to Claim 7, **characterized in that** the screen printing paste additionally comprises zinc(II) sulfide.

9. Process according to any of Claims 1 to 8, **characterized in that** a mixture of polypropylene glycols having different molecular weights, in particular of polypropylene glycols having a molecular weight of from 400 g/mol to 100 g/mol, is used as screen printing oil.

10. Process according to any of Claims 1 to 9, **characterized in that** the screen printing paste has a viscosity in the order of 10³mPa*s.

11. Process according to any of Claims 1 to 10, **characterized in that** the screen printing paste contains pyrogenic silica, in particular in a concentration of 5-15% by weight.

12. Process according to any of Claims 1 to 11, **characterized in that** the screen printing paste is subsequently removed from the at least one surface, in particular using an aqueous solution of 15-20% by volume of 2-hydroxybutanedioic acid or L-(+)-ascorbic acid.

13. Glass sheet having at least one antibacterial surface produced by a process according to any of Claims 1 to 12.

14. Glass sheet according to Claim 13, **characterized in that** the at least one antibacterial surface has an average roughness in the range from 80 nm to 180 nm and a root mean square roughness in the range from 100 nm to 200 nm.

## Revendications

1. Procédé de fabrication d'une surface de verre antibactérienne, comprenant les étapes suivantes :
a) mise en place d'une plaque de verre ayant au moins une surface ;
b) application d'un pâte sérigraphique sur l'au moins une surface, la pâte sérigraphique comprenant une huile sérigraphique ainsi qu'au moins un nitrure, un sulfure ou un oxyde d'un premier cation métallique, en particulier l'aluminium, le cuivre, le titane, le zinc, l'étain ou le zirconium ;
c) séchage de la pâte sérigraphique sur l'au moins une surface, en particulier à 60 °C ;
d) traitement thermique de la plaque de verre à une température supérieure à 500 °C, en particulier supérieure à 600 °C ;
e) enlèvement de la pâte sérigraphique ;
**caractérisé en ce que** la pâte sérigraphique comprend au moins un oxyde thermostable d'un second cation métallique.

2. Procédé selon la revendication 1, **caractérisé en ce que** l'au moins un oxyde thermostable du second cation métallique est un oxyde inerte, en particulier un oxyde ayant une enthalpie de formation standard inférieure à -800 kJ/mol, de préférence inférieure à -1100 kJ/mol.

3. Procédé selon l'une des revendications 1 ou 2, **caractérisé en ce que** l'au moins un oxyde thermostable du second cation métallique est présent à une concentration de 20 % en poids à 50 % en poids, en particulier de 30 % en poids à 40 % en poids dans la pâte sérigraphique.

4. Procédé selon l'une des revendications 1 à 3, **caractérisé en ce que** l'au moins un nitrure, sulfure ou oxyde du premier cation métallique est présent à une concentration de 20 % en poids à 50 % en poids, en particulier de 30 % en poids à 40 % en poids dans la pâte sérigraphique.

5. Procédé selon l'une des revendications 1 à 4, **caractérisé en ce que** l'au moins un oxyde thermostable du second cation métallique est l'oxyde de zirconium(IV).

6. Procédé selon l'une des revendications 1 à 5, **caractérisé en ce que** la pâte sérigraphique comprend au moins un oxyde ou un sulfure de cuivre et/ou de zinc.

7. Procédé selon l'une des revendications 1 à 6, **caractérisé en ce que** la pâte sérigraphique comprend du sulfure de cuivre(I).

8. Procédé selon la revendication 7, **caractérisé en ce que** la pâte sérigraphique comprend en outre du sulfure de zinc(II).

9. Procédé selon l'une des revendications 1 à 8, **caractérisé en ce qu'**on utilise en tant qu'huile sérigraphique un mélange de polypropylèneglycols ayant différentes masses moléculaires, en particulier de polypropylèneglycols ayant une masse moléculaire de 400 g/mol et de 100 g/mol.

10. Procédé selon l'une des revendications 1 à 9, **caractérisé en ce que** la pâte sérigraphique présente une viscosité de l'ordre de grandeur de 10³ mPa*s.

11. Procédé selon l'une des revendications 1 à 10, **caractérisé en ce que** la pâte sérigraphique contient de la silice pyrogène, en particulier à une concentration de 5 à 15 % en poids.

12. Procédé selon l'une des revendications 1 à 11, **caractérisé en ce que** la pâte sérigraphique est ensuite enlevée de l'au moins une surface, en particulier avec une solution aqueuse de 15 à 20 % en volume d'acide 2-hydroxybutanedioïque ou d'acide L-(L+)-ascorbique.

13. Plaque de verre ayant au moins une surface antibactérienne, fabriquée par un procédé selon l'une des revendications 1 à 12.

14. Plaque de verre selon la revendication 13, **caractérisée en ce que** l'au moins une surface antibactérienne présente une rugosité moyenne dans la plage de 80 nm à 180 nm et une rugosité quadratique dans la plage de 100 nm à 200 nm.
